# EUROPÄISCHE PATENTSCHRIFT

(11) **EP 0 554 560 B1**
(45) Veröffentlichungstag und Bekanntmachung des Hinweises auf die Patenterteilung: **06.09.1995**
(21) Anmeldenummer: 92121873.1
(22) Anmeldetag: 23.12.1992
(51) Int. Cl.: A01D 34/73

(54) **Rasenmäher**
Lawn mower
Tondeuse à gazon

(30) Priorität: 01.02.1992 DE 4202865
(43) Veröffentlichungstag der Anmeldung: 11.08.1993
(73) Patentinhaber: SABO-Maschinenfabrik GmbH, D-51645 Gummersbach (DE)
(72) Erfinder: Ostermeier, Heinrich, W-5000 Köln 90 (DE); Brenner, Hans-Josef, W-5063 Overath-Vilkerath (DE); Dzierzewski, Jürgen, W-5276 Wiehl (DE)
(74) Vertreter: Harwardt, Günther, Dipl.-Ing.

(56) Entgegenhaltungen:
- DE-A- 3 123 244
- FR-A- 2 446 054
- GB-A- 1 206 558
- GB-A- 1 584 495
- GB-A- 2 077 564
- US-A- 4 292 791
- US-A- 4 686 819

## Beschreibung

Die Erfindung betrifft einen Rasenmäher mit einem verfahrbaren Gehäuse, einem Motor und einem davon drehend um eine Hochachse angetriebenen Messerbalken sowie einem bezüglich der Aufstandsfläche für das Gehäuse oberhalb des Messerbalkens angeordneten und mit diesem drehend angetriebenen Mulchmesser, wobei sowohl der Messerbalken als auch das Mulchmesser in der Draufsicht gesehen als längliches Blatt gestaltet ist und beide an ihrer in Drehrichtung vorne liegenden Kante mit einer Schneidkante versehen sind und der Messerbalken zu seiner der Schneidkante abgewandten Hinterkante hin mit einem nach oben gerichteten Flügel und das Mulchmesser zu seiner der Schneidkante abgewandten Hinterkante hin mit Mitteln zur Erzeugung eines gerichteten Luftstromes versehen ist.

Ein solcher, als Mulchmäher gestalteter Rasenmäher ist aus der US-PS 4 292 791 bekannt. Das zum Messerbalken umfangsversetzte Mulchmesser weist einen nach unten verlaufenden Flächenabschnitt auf, der sich von der Vorderkante des Mulchmessers, welche die Schneidkante enthält, nach hinten zur Hinterkante hin erstreckt. Hierdurch wird eine nach unten gerichtete Luftströmung erzeugt die zur Ablenkung der vom Mulchmesser nochmals zerkleinerten Grasabschnitte gedacht ist. Der Mäher ist speziell als Mulchmäher gestaltet und weist ein geschlossenes Gehäuse auf. Das vom Messerbalken abgetrennte und anschließend vom Mulchmesser ein- oder mehrfach zerkleinerte Gras wird nach unten auf den Boden, das heißt die Aufstandsfläche des Mähers abgelegt.

Von Nachteil bei dieser Messeranordnung ist, daß durch die Parallelanordnung des Messerbalkens und des Mulchmessers bezüglich deren Schneidkante, insbesondere beim Mähen von längerem Gras kein besonders gutes Zerkleinerungsergebnis erzielt wird. Für das Mulchen von Gras ist jedoch eine feine Zerkleinerung erforderlich, um das Gras wieder in der zerkleinerten Form auf dem Boden ablegen zu können, ohne daß die Gefahr der Verfilzung des Rasens gegeben ist. Die Zerkleinerung muß in einem Maße erfolgen, daß schnell ein Verrottungsprozess eintritt und das zerkleinerte Gut bis zur Grasnarbe hin beim Ablegen gelangen kann.

Aus der US-PS 46 86 819 ist schließlich ein zum Mähen gedachter Messerbalken mit einem Mulchvorsatz bekannt. Die Zerkleinerung erfolgt unmittelbar von dem Messerbalken. Der Mulchvorsatz umfasst lediglich eine Luftleitanordnung um das abgemähte Gras nach unten ablenken zu können.

Aus der GB 20 77 564 A ist ein spezielles Mulchmesser bekannt, welches in seinem radial äußeren Abschnitt als Mähmesser, mit einem anschließenden, nach oben gerichteten Verlauf zur Erzielung einer aufwärts gerichteten Luftströmung gestaltet ist, die dafür sorgt, daß die abgemähten Grasabschnitte in dem Mähkanal von der Außenwandung über die Deckfläche zur Innenwandung und an dieser nach unten geleitet werden. Sie gelangen dann in den Bereich einer weiteren Schneidkante, welche in einen nach unten gerichteten Verlauf übergeht, der zur Erzielung einer nach unten gerichteten Luftströmung dient, um die an der weiteren Schneidkante nochmals zerkleinerten Grasabschnitte nach unten auf den Boden abzulegen. Es handelt sich also um einen Einzweckmäher.

Aus der GB 15 84 495 ist schließlich eine Ausbildung bekannt, die dazu dient, einen konventionellen Rasenmäher mit einem Messerbalken und einem Seitenauswurf in einen Mulchmäher zu verwandeln. Hierzu wird vorgeschlagen, den Messerbalken gegen ein spezielles Mulchmesser auszutauschen und zusätzlich einen Deckel vorzusehen, der die Auswurföffnung im Gehäuse verschließt.

Der Erfindung liegt die Aufgabe zugrunde, ausgehend vom gattungsbildenden Stand der Technik einen Rasenmäher zu schaffen, mit dem beim Einsatz als Mulchmäher ein verbessertes Zerkleinern der abgetrennten Grasabschnitte erreicht wird und andererseits ein sauberer Schnitt gewährleistet ist.

Diese Aufgabe wird erfindungsgemäß dadurch gelöst, daß zur Erzielung eines nach radial innen auf die Drehachse und nach oben zur Gehäusedeckfläche gerichteten Luftstromes der die Schneidkante des Mulchmessers enthaltende Flächenabschnitt des Mulchmessers gegenüber dessen Zentralflächenabschnitt um eine Kante nach oben abgewinkelt ist, welche mit der Längsachse des Mulchmessers zu der die Schneidkante enthaltenden Vorderkante hin einen stumpfen Winkel einschließt.

Von Vorteil bei dieser Ausbildung ist, daß ein verbessertes Mulchergebnis bei Mähern die ein mit einer einzigen Ausnehmung versehenes Gehäuse oder ein solches mit einem Ringkanal aufweisen, erreicht wird. Der schräge Verlauf der Schneidkante des Mulchmessers sorgt dafür, daß eine Mehrfachzerkleinerung erfolgt. Es wirkt wie mehrere übereinander angeordnete Schneiden.

Ein weiterer Vorteil besteht darin, daß ein Einsatz auch als normaler Messerbalkenmäher in Frage kommt, ohne daß das Mulchmesser entfernt zu werden braucht. Es wird von den aufwärtsgerichteten Flügeln des Messerbalkens eine Energie auf das abgeschnittene Gras ausgeübt, die ausreichend ist, das abgemähte Gut aus der Auswurföffnung, sei es eine Seitenauswurföffnung oder Heckauswurföffnung, herauszubefördern. Ferner ergibt die Abwinklung einen Vorteil insofern, als die Belegung der Kanalwände beim Mähen, insbesondere im feuchten Gras, durch die nach radial innen gerichtete Luftströmung des Mulchmessers verringert wird. Die Größe der Abwinklung, das heißt die Neigung der abgewinkelten Fläche gegenüber der Zentralfläche und die Größe des Winkels der Kante zur Längsachse sind abhängig von der gewünschten Verweildauer des abgeschnittenen Gutes im Mähergehäuse. Durch eine größere Verweildauer besteht die Möglichkeit, daß das abgeschnittene Gras mehrfach mit der Schneidkante des Mulchmessers in Berührung kommt und insofern mehrfach zerkleinert wird. Wenn der Neigungswinkel gegen 90 ° geht, geht der Auftrieb gegen Null. Wenn der Winkel der Kante mit der Längsachse gegen 90 ° geht, dann geht die radial nach innen gerichtete Luftströmung gegen Null.

Erreichen die Grasabschnittte eine bestimmte Größe durch Mehrfachabtrennung, dann können sie nicht mehr in der Schwebe gehalten werden und werden auf Grund der Luftströmung zur Drehachse transportiert und fallen nach unten, wenn die Energie des Luftstromes nicht mehr ausreicht sie in der Schwebe zu halten. Aber auch beim Einsatz als Mäher mit Heck- oder Seitenauswurf ergeben sich erheblich verbesserte Mähergebnisse, insofern, als durch die Mehrfachzerkleinerung eine Volumenreduzierung eintritt und damit hohes Gras problemloser gemäht werden kann.

In weiterer Ausgestaltung der Erfindung ist vorgesehen, daß der Winkel der Kante zur Längsachse zwischen 95 ° und 115 °, insbesondere 105 ° beträgt.

Der die Schneidkante aufweisende Flächenabschnitt des Mulchmessers ist gegenüber dessen Zentralflächenabschnitt um einen stumpfen Neigungswinkel geneigt angeordnet. Dieser beträgt vorzugsweise zwischen 110° und 160°, insbesondere 135°.

Zur Erzielung einer drehfesten Verbindung ist das Mulchmesser mit Vorsprüngen versehen, die den Messerbalken übergreifen.

In weiterer Ausgestaltung der Erfindung ist vorgeschlagen, daß der Rotationsdurchmesser des Mulchmessers kleiner ist als der des Messerbalkens. Der Größenunterschied ist abhängig von der gewünschten Verweildauer des abgetrennten Gutes im Gehäuse.

Vorzugsweise sind Mulchmesser und Messerbalken umfangsversetzt zueinander angeordnet. Es ist jedoch auch eine überdeckende Anordnung möglich.

Für den alternativen Einsatz als Rasenmäher mit einer Auswurföffnung bzw. für den Einsatz als reiner Mulchmäher ist vorgesehen, bei einem mit einem Auswurf versehenen Gehäuse einen Deckel vorzusehen, der die Kontur der Gehäusewandung aufweist.

Ein bevorzugtes Ausführungsbeispiel der Erfindung ist in der Zeichnung schematisch dargestellt.

Es zeigt:

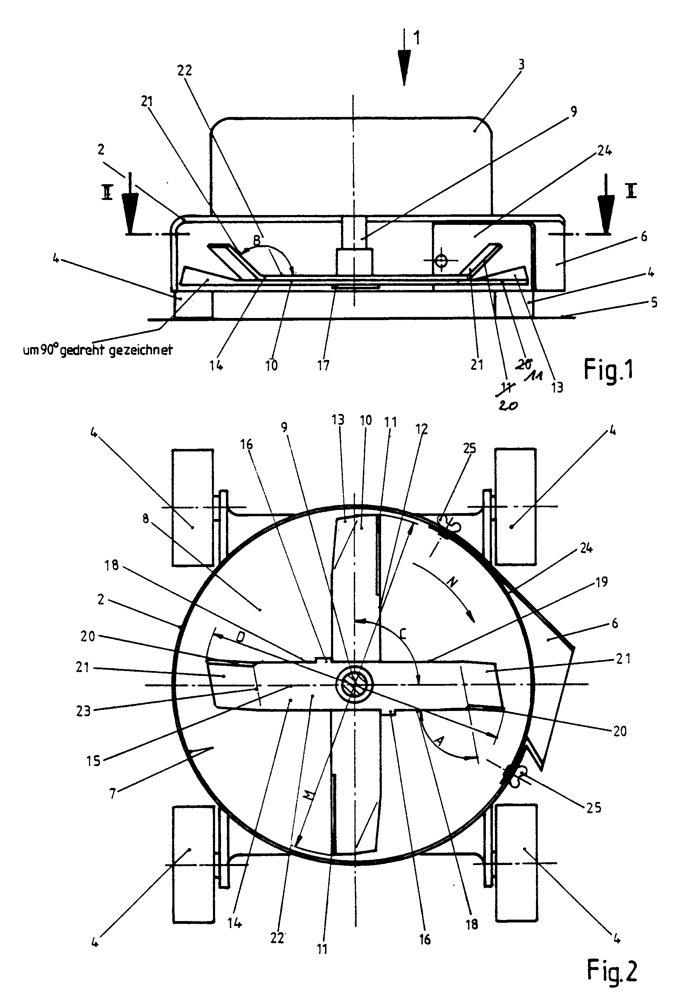

- Figur 1: einen Querschnitt durch einen erfindungsgemäßen Rasenmäher,
- Figur2: einen Schnitt II-II gemäß Figur 1.

Der in den Zeichnungsfiguren 1 und 2 dargestellte Rasenmäher 1 besitzt ein Gehäuse 2, das mit Rädern 4 versehen ist, mit dem dieses auf der Aufstandsfläche 5, beispielsweise der Rasenfläche, verfahrbar ist. Ferner weist das Gehäuse 2 eine seitliche Auswurföffnung 6 auf. Die Wandung des Gehäuses 2 ist mit 7 bezeichnet. Sie öffnet sich zur Auswurföffnung 6 hin. Auf dem Gehäuse 2 ist der Motor 3 montiert. Der Motor 3 weist eine Antriebswelle 9 auf, die in den Mähraum 8 des Gehäuses, der von der Wandung 7 umschlossen wird, hineinreicht. An der drehbar antreibbaren Antriebswelle 9 ist nächstliegend zur Aufstandsfläche 5 ein Messerbalken 10 befestigt. Der Messerbalken 10 weist in Drehrichtung N vorne zwei Schneidkanten 11 auf. Der Rotationsdurchmesser des Messerbalkens 10 ist mit M bezeichnet. Die Schneidkanten 11 erstrecken sich über eine bestimmte Länge, ausgehend von dem Rotationsdurchmesser zur Antriebswelle 9 hin. Der Messerbalken 10 ist als Blatt gestaltet. Von der mit der Schneidkante 11 versehenen Vorderkante 12 ausgehend ist zur Hinterkante hin im Bereich der Schneidkanten 11 jeweils ein Flügel 13 vorgesehen, der für einen nach oben gerichteten Luftstrom sorgt, aber auch das abgemähte Gut in Richtung auf die Auswurföffnung 6 transportiert. Oberhalb des Messerbalkens 10 ist ein Mulchmesser 14 angeordnet. Das Mulchmesser 14 ist ebenfalls als längliches Blatt gestaltet und weist Vorsprünge 16 auf, die den Messerbalken 10 übergreifen und dieses mit dem Messerbalken 10 drehfest verbinden. Beide, das heißt Messerbalken 10 und Mulchmesser 14, sind auf der Antriebswelle 9 durch eine Schraube 17 festgelegt. Das Mulchmesser 14 dreht im gleichen Drehsinne mit dem Messerbalken 10. Es weist ebenfalls, ausgehend von dem Rotationsdurchmesser D, radial nach innen hin Schneidkanten 20 im Bereich seiner Vorderkanten 18 auf. Der Rotationsdurchmesser D des Mulchmessers 14 ist kleiner bemessen als der Rotationsdurchmesser M des Messerbalkens 10. Das Mulchmesser 10 weist einen Zentralflächenabschnitt 22 auf, der im wesentlichen parallel zur Aufstandsfläche 5 bzw. senkrecht zur Rotationsachse der Antriebswelle 9 verläuft. Die Längsachse des Mulchmessers 14 ist mit 15 bezeichnet. Die beiden äußeren Flächenabschnitte 21 des Mulchmessers 14 sind gegenüber dem Zentralflächenabschnitt 22 nach oben bezüglich der Aufstandsfläche 5 abgewinkelt. Die Abwinklung erfolgt um die Kante 23. Die Kante 23 verläuft derart, daß sie mit der Längsachse 15 einen stumpfen Winkel A bildet. Vorzugsweise liegt dieser Winkel im Bereich von 95 ° bis 115 ° und insbesondere in der Größenordnung von 105°. Dabei handelt es sich um den Winkel A der zwischen der Längsachse 15 und der Vorderkante 18 und der Kante 21 angeordnet ist. Die Größe des Winkels A richtet sich nach dem gewünschten radial nach innen und oben gerichteten Luftstrom.

Der Winkel B um den die Flächenabschnitte 21 gegenüber dem Zentralflächenabschnitt 22 geneigt sind, liegt in der Größenordnung eines stumpfen Winkels und beträgt vorzugsweise 135°. Die Größe der Winkel A und B wird bestimmt durch die für das Gras im Mähraum gewünschte Verweildauer.

Für den Fall des Einsatzes als reiner Mulchmäher ist ein Deckel 24 vorgesehen. Dessen Kontur ist der Wandung 7 des Mähraumes im Verlauf des übrigen Bereiches angepaßt. Der Deckel 24 verschließt die Auswurföffnung 6 und ist über Schrauben 25 an der Wandung 7 des Gehäuses 2 auswechselbar festlegbar.

### Bezugszeichenliste

- 1: Rasenmäher
- 2: Gehäuse
- 3: Motor
- 4: Räder
- 5: Aufstandsfläche
- 6: Auswurföffnung
- 7: Wandung des Gehäuses
- 8: Mähraum
- 9: Antriebswelle
- 10: Messerbalken
- 11: Schneidkante des Messerbalkens
- 12: Vorderkante
- 13: Flügel
- 14: Mulchmesser
- 15: Längsachse des Mulchmessers
- 16: Vorsprünge
- 17: Schraube
- 18: Vorderkante
- 19: Hinterkante
- 20: Schneidkante des Mulchmessers
- 21: Flächenabschnitt
- 22: zentralflächenabschnitt
- 23: Kante
- 24: Deckel
- 25: Schraube
- A,B,C: Winkel
- N: Drehrichtung
- D: Rotationsdurchmesser des Mulchmessers
- M: Rotationsdruchmesser des Messerbalkens

## Patentansprüche

1. Rasenmäher mit einem verfahrbaren Gehäuse (2), einem Motor (3) und einem davon drehend um eine Hochachse angetriebenen Messerbalken (10) sowie einem bezüglich der Aufstandsfläche für das Gehäuse (2) oberhalb des Messerbalkens (10) angeordneten und mit diesem drehend angetriebenen Mulchmesser (14), wobei sowohl der Messerbalken (10) als auch das Mulchmesser (14) in der Draufsicht gesehen als längliches Blatt gestaltet sind und beide an ihrer in Drehrichtung vorne liegenden Kante mit einer Schneidkante versehen sind und der Messerbalken (10) zu seiner der Schneidkante (11) abgewandten Hinterkante hin mit einem nach oben gerichteten Flügel (13) und das Mulchmesser (14) zu seiner der Schneidkante (20) abgewandten Hinterkante hin mit Mitteln (21) zur Erzeugung eines gerichteten Luftstromes versehen ist,
dadurch gekennzeichnet,
daß zur Erzielung eines nach radial innen auf die Drehachse und nach oben zur Gehäusedeckfläche gerichteten Luftstromes der die Schneidkante (20) des Mulchmessers (14) enthaltende Flächenabschnitt (21) des Mulchmessers (14) gegenüber dessen Zentralflächenabschnitt (22) um eine Kante (23) nach oben abgewinkelt ist, welche mit der Längsachse (15) des Mulchmessers (14) zu der die Schneidkante (20) enthaltenden Vorderkante (18) hin einen stumpfen Winkel (A) einschließt.

2. Rasenmäher nach Anspruch 1,
dadurch gekennzeichnet,
daß der Winkel (A) der Kante (23) zwischen 95 ° und 115 °, insbesondere 105 ° beträgt.

3. Rasenmäher nach einem der Ansprüche 1 und 2,
dadurch gekennzeichnet,
daß der die Schneidkante (20) aufweisende Flächenabschnitt (21) des Mulchmessers (14) gegenüber dessen Zentralflächenabschnitt (22) um einen stumpfen Neigungswinkel (B) nach oben ansteigend abgewinkelt ist.

4. Rasenmäher nach Anspruch 3,
dadurch gekennzeichnet,
daß der Neigungswinkel (B) zwischen 110 ° und 160 °, insbesondere 135 ° beträgt.

5. Rasenmäher nach einem der Ansprüche 1 bis 4,
dadurch gekennzeichnet,
daß das Mulchmesser (14) über Vorsprünge (16), die den Messerbalken (10) übergreifen, drehfest mit diesem verbunden ist.

6. Rasenmäher nach einem der Ansprüche 1 bis 5,
dadurch gekennzeichnet,
daß der Rotationsdurchmesser (D) des Mulchmessers (14) kleiner ist als der (M) des Messerbalkens (10).

## Claims

1. A lawn mower having a movable housing (2), a motor (3) and a cutter blade (10) rotatingly driven thereby around a vertical axis, and a mulching blade (14) which, with reference to the supporting face for the housing (2), is arranged above the cutter blade (10) and rotatingly driven therewith, with the cutter blade (10) and the mulching blade (14), if viewed in a plan view, being shaped like an oblong blade and with both of them, at their edges positioned in front in the direction of rotation, being provided with a cutting edge and with the cutter blade (10), towards its rear edge facing away from the cutting edge (11), being provided with an upwardly directed wing (13) and with the mulching blade (14), towards its rear edge facing away from the cutting edge (20), being provided with means (21) for generating a directional air stream, characterised in
that for generating an air stream which is directed radially inwardly towards the rotational axis and upwardly towards the housing cover face, the surface portion (21) of the mulching blade (14) containing the cutting edge (20) of the mulching blade (14), relative to its central surface portion (22), is angled upwardly by an edge (23) which, together with the longitudinal axis (15) of the mulching blade (14), encloses an obtuse angle (A) towards the front edge (18) containing the cutting edge (20).

2. A lawn mower according to claim 1,
that the angle (A) of the edge (23) amounts to any value between 95° and 115°, especially 105°.

3. A lawn mower according to any one of claims 1 and 2,
characterised in
that the surface portion (21) of the mulching blade (14) comprising the cutting edge (20) is angled upwardly by an obtuse angle of inclination (B) relative to its central surface portion (22).

4. A lawn mower according to claim 3,
characterised in
that the angle of inclination (B) amounts to any value between 110° and 160°, especially 135°.

5. A lawn mower according to any one of claims 1 to 4,
characterised in
that the mulching blade (14) is non-rotatably connected to the cutter blade (10) by means of projections (16) extending over the latter.

6. A lawn mower according to any one of claims 1 to 5,
characterised in
that the rotational diameter (D) of the mulching blade (14) is smaller than the rotational diameter (M) of the cutter blade (10).

## Revendications

1. Tondeuse à gazon, comportant un boîtier déplaçable (2), un moteur (3), et une barre-couteau (10) entrâinée par celui-ci en rotation autour d'un axe vertical, ainsi qu'un couteau de déchiquetage (14) agencé, par rapport à la surface d'appui pour le boîtier (2), au-dessus de la barre-couteau (10) et entraîné avec celle-ci en rotation, dans laquelle aussi bien la barre-couteau (10) que le couteau de déchiquetage (14) sont réalisés, en vue de dessus, sous la forme d'une lame allongée et tous les deux sont pourvus d'une arête de coupe à leur arête située en avant en direction de rotation, et la barre-couteau (10) est pourvue d'une aile (13) dirigée vers le haut, en direction de son arête arrière détournée de l'arête de coupe (11), et le couteau de déchiquetage (14) est pourvu d'organes (21) pour la production d'un courant d'air dirigé, en direction de son arête arrière détournée de l'arête de coupe (20),
caractérisée en ce que
pour l'obtention d'un courant d'air dirigé radialement vers l'intérieur sur l'axe de rotation, et vers le haut en direction de la surface de recouvrement du boîtier, la section de surface (21) comportant l'arête de coupe (20) du couteau de déchiquetage (14) est coudée vers le haut, par rapport à sa section de surface centrale (22), autour d'une arête (23) qui forme avec l'axe longitudinal (15) du couteau de déchiquetage (14) un angle obtus (A) en direction de l'arête avant (18) comportant l'arête de coupe (20).

2. Tondeuse à gazon selon la revendication 1,
caractérisée en ce que l'angle (A) de l'arête (23) est de 95° à 115°, et s'élève en particulier à 105°.

3. Tondeuse à gazon selon l'une ou l'autre des revendications 1 et 2,
caractérisée en ce que la section de surface (21) du couteau de déchiquetage (14), présentant l'arête de coupe (20), est inclinée en montant vers le haut par rapport à sa section de surface centrale (22), d'un angle d'inclinaison obtus (B).

4. Tondeuse à gazon selon la revendication 3,
caractérisée en ce que l'angle d'inclinaison (B) est de 110° et 160°, et s'élève en particulier à 135°.

5. Tondeuse à gazon selon l'une quelconque des revendications 1 à 4,
caractérisée en ce que le couteau de déchiquetage (14) est relié, via des saillies (16) qui engagent la barre-couteau (10) par le dessus, solidairement en rotation à celle-ci.

6. Tondeuse à gazon selon l'une quelconque des revendications 1 à 5,
caractérisée en ce que le diamètre de rotation (D) du couteau de déchiquetage (14) est inférieur au diamètre de rotation (M) de la barre-couteau (10).
